# EUROPÄISCHE PATENTSCHRIFT

(11) **EP 2 692 157 B1**
(45) Veröffentlichungstag und Bekanntmachung des Hinweises auf die Patenterteilung: **10.05.2017**
(21) Anmeldenummer: 12712963.3
(22) Anmeldetag: 29.03.2012
(51) Int. Cl.: H04W 4/00, G06F 21/57

(54) **VERFAHREN UND VORRICHTUNG ZUR AKTUALISIERUNG EINER DATENTRÄGERAPPLIKATION**
METHOD AND APPARATUS FOR UPDATING A DATA STORAGE MEDIUM APPLICATION
MÉTHODE ET APPAREIL POUR L'ACTUALISATION D'UNE APPLICATION DE SUPPORT DE DONNÉES

(30) Priorität: 31.03.2011 DE 102011015711
(43) Veröffentlichungstag der Anmeldung: 05.02.2014
(73) Patentinhaber: Giesecke & Devrient GmbH, 81677 München (DE)
(72) Erfinder: SUMMERER, Alexander, 85586 Poing (DE)
(86) Internationale Anmeldenummer: PCT/EP2012/001398
(87) Internationale Veröffentlichungsnummer: WO 2012/130461

(56) Entgegenhaltungen:
- EP-A1- 2 106 191
- US-A1- 2005 207 562
- "3rd Generation Partnership Project; Technical Specification Group Core Network and Terminals; Security mechanisms for the (U)SIM application toolkit; Stage 2 (Release 5)", 3GPP STANDARD; 3GPP TS 23.048, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, Nr. V5.9.0, 1. Juni 2005 (2005-06-01), Seiten 1-37, XP050362219,
- "3rd Generation Partnership Project; Technical Specification Group Services and System Aspects; Feasibility study on the security aspects of remote provisioning and change of subscription for Machine to Machine (M2M) equipment (Release 9)", 3GPP STANDARD; 3GPP TR 33.812, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, Nr. V9.2.0, 22. Juni 2010 (2010-06-22), Seiten 1-87, XP050441986,

## Beschreibung

Die vorliegende Erfindung betrifft ein Verfahren zum Aktualisieren eines Datenträgers durch Aktualisieren oder Installieren einer auf einem Datenträger, der in ein Telekommunikationsendgerät eingesetzt ist, ausführbaren Datenträgerapplikation, einen derartigen Datenträger, ein derartiges Telekommunikationsendgerät sowie ein hierbei verwendetes digitales Zertifikat.

Inzwischen sind Telekommunikationsendgeräte, die mit leistungsfähigen Prozessoren und vielerlei Applikationen ausgestattet sind - so genannte Smartphones - sehr populär. Die hierfür benötigte Telekommunikations- bzw. Mobilfunkverbindung und/oder der für die vielfachen, häufig auch vertrauliche Daten verarbeitenden Anwendungen benötigte abgesicherte Speicherplatz wird von sicheren Datenträgern bereitgestellt, die in das jeweilige Telekommunikationsendgerät einsetzbar sind, z.B. von (U)SIM-Mobilfunkkarten, Smartcards, sicheren digitalen (SD) Speicherkarten oder dergleichen. Solche sicheren Datenträger umfassen in der Regel auch einen Prozessor und darauf ausführbare Applikationen. Es lassen sich hierbei zwei verschiedene Arten von Applikationen unterscheiden, nämlich die auf dem Telekommunikationsendgerät installierten Endgeräteapplikationen - bei einigen Smartphones auch als "Apps" bezeichnet -, und die auf dem Datenträger ausführbaren Datenträgerapplikationen - bei einigen Datenträgern auch als "Applets" bezeichnet.

Während mit den Endgeräteapplikationen (z.B. Apps) vielfältige Anwendungen auf dem Telekommunikationsendgerät bereitgestellt werden, betreffen die Datenträgerapplikationen (z.B. Applets) häufig Anwendungen im Zusammenhang mit Sicherheitsaspekten des Telekommunikationsendgeräts, z.B. die Telekommunikations- oder Mobilfunkverbindung, die Identität eines Nutzers, geldwerte Transaktionen oder sonstige vertrauliche oder schützenswerte Daten. Die Datenträger verfügen insofern über besondere Sicherheitsfunktionalitäten, insbesondere über einen abgesicherten Speicher.

Auf dem Telekommunikationsendgerät ausgeführte Endgeräteapplikationen benötigen häufig Zugriff auf Datenträgerapplikationen in dem sicheren Datenträger. Um einen Missbrauch der sicherheitsrelevanten Funktionalitäten der Datenträgerapplikationen und der dort gespeicherten vertraulichen Daten zu verhindern, kann z.B. eine Zugriffsrechteverwaltung vorgesehen sein, die den Zugriff einer Endgeräteapplikation auf eine Datenträgerapplikation nur bei entsprechenden Zugriffsrechten erlaubt. Ein solcher Mechanismus betrifft jedoch nur die Zugriffsrechte solcher Endgeräteapplikationen, die bereits bei der Herstellung des Datenträgers, z.B. bei dessen Initialisierung oder Personalisierung, bekannt waren und berücksichtigt werden konnten. Endgeräteapplikationen, die nachträglich auf einem Telekommunikationsendgerät installiert werden, sind der Zugriffsrechteverwaltung deshalb nicht bekannt und haben demzufolge auch keinen Zugriff auf installierte Datenträgerapplikationen. Noch viel weniger ist ein Zugriff auf solche Datenträgerapplikationen möglich, die erst noch auf dem Datenträger installiert werden müssten. Die nachträgliche Aktualisierung von Zugriffsrechten oder gar die nachträgliche Installation neuer Datenträgerapplikationen auf einem bereits ausgelieferten Datenträger ist hierbei insbesondere aus Sicherheitsgründen nicht gewünscht bzw. gar nicht möglich.

Da Telekommunikationsendgeräte üblicherweise nur über einen einzigen Datenträgersteckplatz verfügen, können geänderte Zugriffsrechte oder neue Datenträgerapplikationen auch nicht auf einem zweiten sicheren Datenträger bereitgestellt werden. Die Bereitstellung eines vom Anbieter entsprechend aktualisierten Austausch-Datenträgers ist zwar denkbar aber nicht besonders vorteilhaft, da dann wichtige und gar nicht oder nur schwer wieder beschaffbare Nutzerdaten verloren wären, z.B. digitale Zertifikate, Lizenzen oder Rechte.

In diesem Zusammenhang schlägt die EP 1361 527 A1 vor, den Datenbestand einer ausgelieferten Mobilfunkkarte mittels einer kontaktlosen Datenkommunikation über eine Luft- oder OTA-Schnittstelle ("over-the-air") zu aktualisieren. Andere in Telekommunikationsendgeräte einsetzbare Datenträger, z.B. SD-Karten oder dergleichen, stellen die hierfür benötigte technische Infrastruktur jedoch häufig nicht bereit. Darüber hinaus würden Nutzer eines sicheren Datenträgers mit vertraulichen Nutzerdaten in ihrem Vertrauen auf die Datensicherheit erschüttert, da kontaktlose Datenübertragungen häufig und berechtigterweise Befürchtungen hinsichtlich Datensicherheit und Datenmissbrauch auslösen.

Es ist demnach die Aufgabe der vorliegenden Erfindung, eine technisch einfache und ausreichend sichere Möglichkeit zur Aktualisierung eines in einem Telekommunikationsendgerät eingesetzten sicheren Datenträgers, durchgeführt durch eine Aktualisierung oder Installation einer (oder mehrerer) Datenträgerapplikation(en) in dem sicheren Datenträger, zu schaffen.

Diese Aufgabe wird durch ein Verfahren und Vorrichtungen mit den Merkmalen der unabhängigen Ansprüche gelöst. In davon abhängigen Ansprüchen sind vorteilhafte Ausgestaltungen und Weiterbildungen der Erfindung angegeben.

US 2005/207562 A1 offenbart ein Verfahren zum Aktualisieren einer in einem Dual-Slot-Telekommunikations-Endgerät eingesetzten SIM-Karte mittels einer in einem zweiten Kartenleser des Endgeräts temporär eingesetzten Administrator-Karte. Mittels einer in der Administrator-Karte gespeicherten Lade-Applikation "Loader Ch" werden neue Applets (Datenträgerapplikationen) in die SIM-Karte geladen.

EP 2106191 A1 offenbart ein Verfahren zum Laden von Applikationen in eine in ein Telekommunikations-Endgerät eingesetzte Smartcard. Zusätzlich zur Applikation wird in die Smartcard ein sogenanntes Sicherheitstoken geladen, mit dem die geladene Applikation überprüfbar ist, beispielsweise durch Verifizierung einer Prüfsumme über die Daten der Applikation.

Die technischen Standards 3GP TS 23.048 (V.5.9.0, 2005-06) und 3GPP TS 33.812 (V.9.2.0, 2010-06) umfassen Abschnitte, die im Zusammenhang mit dem Laden von Applikationen in Datenträger für Telekommunikationsendgeräte von Interesse sind.

Bei einem Verfahren zum Aktualisieren oder Installieren einer auf einem sicheren Datenträger ausführbaren Datenträgerapplikation, wobei der Datenträger in einem Telekommunikationsendgerät eingesetzt ist, werden erfindungsgemäß Aktualisierungsdaten in ein Endgeräteapplikationszertifikat einer auf dem Telekommunikationsendgerät zu installierenden Endgeräteapplikation integriert, auf deren Basis die betreffende Datenträgerapplikation dann konfiguriert werden kann. Hierzu wird die Endgeräteapplikation auf dem Telekommunikationsendgerät installiert und die Aktualisierungsdaten werden aus dem Endgeräteapplikationszertifikat der installierten Endgeräteapplikation extrahiert. Schließlich wird die Datenträgerapplikation gemäß den extrahierten Aktualisierungsdaten in dem Datenträger derart konfiguriert, dass diese in aktualisierter oder neu installierter Form auf dem Datenträger vorliegt.

Bei der Aktualisierung der Datenträgerapplikation kann abhängig von der Art der Aktualisierung die Datenträgerapplikation selbst (geprüft und bedarfsweise) verändert werden. Insbesondere bei einer Aktualisierung in Gestalt einer Konfiguration der Datenträgerapplikation kann es der Fall sein, dass die Datenträgerapplikation selbst nicht verändert wird, sondern dass lediglich Zugriffsrechte zwischen der Datenträgerapplikation und anderen Datenträger- oder Endgeräteapplikationen (geprüft und bedarfsweise) verändert werden.

Gemäß einem Aspekt der vorliegenden Erfindung wird ein Endgeräteapplikationszertifikat als Containerdatenstruktur für die Aktualisierungsdaten verwendet, indem die Aktualisierungsdaten außerhalb des Telekommunikationsendgeräts (und des Datenträgers) in das Endgeräteapplikationszertifikat integriert werden und innerhalb des Telekommunikationsendgeräts oder des Datenträgers wieder extrahiert werden. Gemäß einem weiteren Aspekt der Erfindung wird die für das Bereitstellen der Aktualisierungsdaten innerhalb des Telekommunikationsendgeräts oder des Datenträgers verwendete Containerstruktur in Form eines Endgeräteapplikationszertifikats einer zu installierenden Endgeräteapplikation in das Telekommunikationsendgerät eingebracht. Gemäß noch einem weiteren Aspekt der Erfindung werden die Aktualisierungsdaten mit genau derjenigen Endgeräteapplikation in das Telekommunikationsendgerät eingebracht, welche einen Zugriff auf die Datenträgerapplikation benötigt, deren Aktualisierung die Aktualisierungsdaten betreffen.

Im Zusammenhang mit der vorliegenden Erfindung ist unter einem Zertifikat eine digitale Datenstruktur zu verstehen, durch die ein Eigentümer und gegebenenfalls weitere Eigenschaften eines öffentlichen Schlüssels bestätigt werden, beispielsweise von einer vertrauenswürdigen Zertifizierungsstelle. Das Endgeräteapplikationszertifikat bestätigt in dieser Weise die Vertrauenswürdigkeit des öffentlichen Schlüssels des Anbieters der betreffenden Endgeräteapplikation, welche das Endgeräteapplikationszertifikat umfasst. Selbiges gilt für das weiter unten genannte Datenträgerapplikationszertifikat, welches den öffentlichen Schlüssel eines Anbieters einer entsprechenden Datenträgerapplikation umfasst.

Ein solches Zertifikat kann beispielsweise gemäß dem X.509-Standard der internationalen Fernmeldeunion (ITO) aufgebaut sein. Das Endgeräteapplikationszertifikat ist vorzugsweise ein solches X.509-Zertifikat, so dass die Aktualisierungsdaten in ein gemäß X.509-Standard vorgesehenes Erweiterungsfeld ("extensions") integriert bzw. eingeschrieben werden. Jedoch ist auch jede andere Zertifikatdatenstruktur, die ein Integrieren derartiger Erweiterungen zulässt, im Rahmen der vorliegenden Erfindung geeignet.

Die vorliegende Erfindung ermöglicht einerseits eine technisch einfache und sichere Aktualisierung von installierten Datenträgerapplikationen, insbesondere von Zugriffsrechten von Endgeräteapplikationen auf solche Datenträgerapplikationen, und andererseits eine einfache und sichere Installation neuer Datenträgerapplikationen mit entsprechenden Zugriffsrechten durch Endgeräteapplikationen. Die Aktualisierung bzw. Installierung von Datenträgerapplikationen berührt auch nicht das Vertrauen eines Nutzers in die Sicherheit des sicheren Datenträgers, da er die datentechnischen Veränderungen nachvollziehen und kontrollieren kann. So muss eine Aktualisierung einer Datenträgerapplikation beispielsweise vom Nutzer aktiv gewollt und initiiert werden, indem er die betreffende Endgeräteapplikation auf sein Telekommunikationsendgerät herunterlädt und installiert, was einen erheblichen Vertrauensgewinn und weitere Sicherheitsvorteile gegenüber der automatischen Aktualisierung über eine Luftschnittstelle mit sich bringt.

Zudem ist eine mit Sicherheitsproblemen verbundene Telekommunikationsverbindung zu einem externen Aktualisierungsserver nicht erforderlich. Der Datenträger benötigt deshalb auch keine über die übliche Infrastruktur hinausgehende Software- oder Hardwareeinrichtungen. Ebenso wenig ist auf dem Telekommunikationsendgerät eine Proxy-Applikation zur Vermittlung zwischen einem externen Aktualisierungsserver und dem Datenträger erforderlich.

Darüber hinaus lässt sich die Erfindung ohne Änderung der technischen Infrastruktur implementieren, da die Aktualisierungsdaten im Wege einer ohnehin in das Telekommunikationsendgerät eingebrachten Containerdatenstruktur - des Endgeräteapplikationszertifikats - bereitgestellt werden, und das im Rahmen der auf Telekommunikationsendgeräten üblichen und bekannten Prozedur der Installation einer Endgeräteapplikation. Dies bedeutet insbesondere, dass in das Endgeräteapplikationszertifikat als Containerdatenstruktur alle zur Aktualisierung oder Installation benötigten Daten vollständig eingebracht werden können, und somit keine weiteren Verfahrensschritte, wie z.B. zusätzliche Nachlade- oder Installationsschritte, notwendig sind.

Vorzugsweise werden die Aktualisierungsdaten von dem Anbieter derjenigen Datenträgerapplikation bereitgestellt, deren Aktualisierung die Aktualisierungsdaten betreffen, und von diesem auch in das Endgeräteapplikationszertifikat integriert. Zur überprüfbaren Autorisierung der Aktualisierung signiert der Anbieter der Datenträgerapplikation das Endgeräteapplikationszertifikat - mitsamt den darin integrierten Aktualisierungsdaten - mit seinem geheimen Schlüssel. Die Signatur des Endgeräteapplikationszertifikats kann dann das vorzugsweise dem X.509-Standard entsprechende Endgeräteapplikationszertifikat derart ergänzen, dass auch das signierte X.509-Endgeräteapplikationszertifikat wieder dem X.509-Standard entspricht. Beispielsweise kann die Signatur in einem speziell für die Signaturhinterlegung vorgesehenen Signaturfeld des X.509-Zertifikats bereitgestellt werden.

Dadurch wird ein wirkungsvoller Kontrollmechanismus geschaffen, der eine nicht autorisierte (z.B. manipulative oder schädigende) Aktualisierung der Datenträgerapplikation oder das Einbringen von sonstigem Schadcode in den Datenträger verhindert, da anhand der Signatur jederzeit überprüfbar ist, ob der Anbieter der betreffenden Datenträgerapplikation deren Aktualisierung zugestimmt hat.

Die Signatur des Endgeräteapplikationszertifikats - und damit die Autorisierung der Aktualisierungsdaten - wird verifiziert, bevor die Datenträgerapplikation gemäß den Aktualisierungsdaten konfiguriert wird. Von dem Anbieter der Datenträgerapplikation nicht autorisierte Aktualisierungen sind also nicht möglich. Die Verifikation kann entweder auf Ebene des Telekommunikationsendgeräts, z.B. durch eine auf diesem installierte Programmierschnittstelle (API) zu dem Datenträger, oder direkt auf Ebene des Datenträgers durchgeführt werden, z.B. von einer entsprechend eingerichteten und abgesicherten Einrichtung, wie der weiter unten diskutierten Sicherheitsapplikation des Datenträgers. Die Verifikation auf dem Datenträger ist jedoch deshalb bevorzugt, da der Datenträger prinzipiell höheren Sicherheitsanforderungen genügt, als das in der Regel nicht speziell abgesicherte Telekommunikationsendgerät.

Die Signatur des Endgeräteapplikationszertifikats - die mit dem geheimen Schlüssel des Anbieters der Datenträgerapplikation erstellt wurde - wird mit einem öffentlichen Schlüssel dieses Anbieters verifiziert. Zu diesem Zweck liegt der öffentliche Schlüssel des Anbieters der Datenträgerapplikation der Sicherheitsapplikation auf dem Datenträger oder der Programmierschnittstelle auf dem Telekommunikationsendgerät vor.

Das Integrieren der Aktualisierungsdaten in das Endgeräteapplikationszertifikat erfolgt durch den Anbieter der Datenträgerapplikation derart, dass die Aktualisierungsdaten für das Telekommunikationsendgerät bzw. dessen Betriebssystem und lauffähige Applikationen transparent sind - d.h. die Aktualisierungsdaten bleiben von dem Telekommunikationsendgerät unbeeinflusst und lassen das Telekommunikationsendgerät unbeeinflusst -, und ohne Auswirkungen an den Datenträger durchgereicht werden, beispielsweise über die auf dem Telekommunikationsendgerät installierte Programmierschnittstelle. Dies kann im Zusammenhang mit einem X.509- Endgeräteapplikationszertifikat beispielsweise dadurch erreicht werden, dass die Aktualisierungsdaten in ein Erweiterungsfeld eingetragen werden, welches bei der eigentlichen Verwendung des Endgeräteapplikationszertifikats als vertrauenswürdiger Träger des öffentlichen Schlüssels des Anbieters der Endgeräteapplikation unbeachtet bleibt.

Die Transparenz der Aktualisierungsdaten für das Telekommunikationsendgerät gilt insbesondere bei der Installation der Endgeräteapplikation auf dem Telekommunikationsendgerät durch eine Installationseinrichtung ("package installer") des Telekommunikationsendgeräts bzw. dessen Betriebssystems. Hierbei wird eine Signatur der Endgeräteapplikation durch deren Anbieter mit dem öffentlichen Schlüssel des Anbieters der Endgeräteapplikation verifiziert, welcher in dem Endgeräteapplikationszertifikat vorliegt.

Vorzugsweise sind die Aktualisierungsdaten auch für die Programmierschnittstelle transparent, da diese die für den Datenträger bestimmten Aktualisierungsdaten lediglich aus dem Endgeräteapplikationszertifikat extrahiert, ohne sie interpretieren oder verarbeiten zu können, und an die Sicherheitsapplikation des Datenträgers weiterleitet. Auf der Ebene des Datenträgers wird dann die eigentliche Konfiguration der Datenträgerapplikation basierend auf den Aktualisierungsdaten durchgeführt.

Die Aktualisierungsdaten beeinflussen also weder die Installationseinrichtung oder die Programmierschnittstelle, noch werden sie durch diese Einrichtungen beeinflusst. In dieser Transparenz besteht im Wesentlichen die erfindungsgemäß ausgenutzte Datencontainer-Eigenschaft des Endgeräteapplikationszertifikats. Bei einem X.509-Endgeräteapplikationszertifikat wird sie sichergestellt, indem die Aktualisierungsdaten in ein Erweiterungsfeld eingebracht werden, dessen Inhalt für das Telekommunikationsendgerät bzw. dessen Betriebssystem bedeutungslos und transparent ist.

Die bereits mehrfach angesprochene, auf dem Datenträger installierte Sicherheitsapplikation (z.B. in Form eines "Security Applet") verwaltet eine Zertifikatliste und eine Zugriffsrechteliste. Die Zertifikatliste umfasst Datenträgerapplikationszertifikate der im Datenträger installierten Datenträgerapplikationen, also Zertifikate, die einen öffentlichen Schlüssel des Anbieters der betreffenden Datenträgerapplikation in vertrauenswürdiger Weise bereitstellen.

Die Sicherheitsapplikation verfügt also über alle öffentlichen Schlüssel von Datenträgerapplikationsanbietern, die gegebenenfalls verwendet werden müssen, um die (von einem Anbieter einer installierten Datenträgerapplikation angefertigte) Signatur eines Endgeräteapplikationszertifikats mit integrierten Aktualisierungsdaten, dessen Endgeräteapplikation Zugriff auf eben diese Datenträgerapplikation benötigt, zu verifizieren. Die Zugriffsrechteliste umfasst die Zugriffsrechte bzw. Zugriffsbedingungen der in dem Telekommunikationsendgerät installierten Endgeräteapplikation auf die in dem Datenträger installierten Datenträgerapplikationen. Vorzugsweise unterteilt sich die Zugriffsrechteliste in je eine Zugriffsrechteliste für jede in dem Datenträger installierte Datenträgerapplikation. Zur einfachen Prüfung von Zugriffsrechten ist hierbei jedes Datenträgerapplikationszertifikat in der Zertifikatliste mit der jeweils zugeordneten Zugriffsrechteliste vorzugsweise über eine Datenträgerapplikationsidentifikation verbunden, die die betreffende Datenträgerapplikation eindeutig referenziert.

Mittels dieser Dateninfrastruktur kann bei einem herkömmlichen Zugriff einer bereits auf dem Telekommunikationsendgerät installierten Endgeräteapplikation auf eine in dem Datenträger bereits installierte Datenträgerapplikation vorzugsweise die Sicherheitsapplikation oder ggf. auch die Programmierschnittstelle prüfen, ob die Zugriffsrechteliste entsprechende Rechte für einen derartige Zugriff vorsieht.

Bei einer neu zu installierenden Endgeräteapplikation muss die betreffende Zugriffsrechteliste jedoch erst noch mit den neuen Zugriffsrechten ergänzt werden, d.h. die betreffende Datenträgerapplikation muss aktualisiert werden. Bei dieser Ausführungsform der Erfindung wird die Datenträgerapplikation also dadurch konfiguriert, dass die dieser Datenträgerapplikation in der Sicherheitsapplikation zugewiesene Zugriffsrechteliste durch neue, von den Aktualisierungsdaten umfasste Zugriffsrechte ergänzt wird.

Der zur Verifikation der Signatur des Endgeräteapplikationszertifikats benötigte öffentliche Schlüssel des Anbieters der Datenträgerapplikation ist bei dieser Ausführungsform bereits in der Sicherheitsapplikation bzw. in der Zertifikatliste hinterlegt, da die betreffende Datenträgerapplikation bereits installiert ist und deren Datenträgerapplikationszertifikat mit dem öffentlichen Schlüssel des Anbieters der Datenträgerapplikation somit in der Zertifikatliste verzeichnet ist. Die Signatur des Endgeräteapplikationszertifikats kann also mit dem öffentlichen Schlüssel des Anbieters der Datenträgerapplikation verifiziert werden, der in dessen Datenträgerapplikationszertifikat in der Zertifikatliste hinterlegt ist.

Ausgangspunkt einer abgewandelten bzw. erweiterten Ausführungsform der Erfindung ist, dass die Datenträgerapplikation, auf welche die zu installierende Endgeräteapplikation Zugriff benötigt, noch gar nicht in dem Datenträger installiert ist. Die Aktualisierungsdaten des Endgeräteapplikationszertifikats betreffen bei dieser Ausführungsform also eine in dem Datenträger neu zu installierende Datenträgerapplikation und umfassen demzufolge auch eine installierbare Version der Datenträgerapplikation selbst, z.B. deren Bytecode.

Die Datenträgerapplikation wird bei dieser Ausführungsform also dadurch konfiguriert, dass sie in dem Datenträger installiert wird und die entsprechenden Änderungen in der Zertifikatliste und der Zugriffsrechteliste vorgenommen werden, um der Endgeräteapplikation Zugriff auf die neu installierte Datenträgerapplikation zu gewähren. Die Aktualisierungsdaten werden dazu nach erfolgreicher Überprüfung der Signatur des Endgeräteapplikationszertifikats von der Programmierschnittstelle aus dem Endgeräteapplikationszertifikat extrahiert und an die Sicherheitsapplikation auf dem Datenträger zur Konfiguration der Datenträgerapplikation weitergeleitet. Neben der Installation der Datenträgerapplikation umfasst deren Konfigurierung bei dieser Ausführungsform auch das Eintragen des betreffenden Datenträgerapplikationszertifikats in die Zertifikatliste durch die Sicherheitsapplikation. Ebenso werden, wie bereits oben erläutert, die benötigten Zugriffsrechte der Endgeräteapplikation aus dem Endgeräteapplikationszertifikat extrahiert und in die betreffende Zugriffsrechteliste eingetragen.

Der öffentliche Schlüssel des Anbieters der Datenträgerapplikation, der zur Überprüfung der Signatur des Endgeräteapplikationszertifikats - und somit zur Prüfung der Autorisierung der Aktualisierungsdaten durch den Anbieter der Datenträgerapplikation - benötigt wird, kann nun jedoch nicht einem bereits in der Zertifikatliste verzeichneten Datenträgerapplikationszertifikat entnommen werden (die betreffende Datenträgerapplikation ist ja noch nicht installiert). Statt dessen umfassen die in das Endgeräteapplikationszertifikat integrieren Aktualisierungsdaten hier auch das Datenträgerapplikationszertifikat mit dem öffentlichen Schlüssel des Anbieters der Datenträgerapplikation. Die Sicherheitsapplikation des Datenträgers kann somit die Signatur des Endgeräteapplikationszertifikats mittels des öffentlichen Schlüssels des Anbieters der Datenträgerapplikation verifizieren, sobald das Datenträgerapplikationszertifikat aus den Aktualisierungsdaten extrahiert wurde.

Gemäß einer besonderen Ausführungsvariante dieser Ausführungsform kann jedoch auf die Zugriffsrechte auch gänzlich verzichtet werden. Hierbei kann der Anbieter die noch zu installierende Datenträgerapplikation derart genau auf die betreffende Endgeräteapplikation abstimmen, dass es bei dem Zugriff der Endgeräteapplikation keiner besonderen Zugriffsrechte bedarf, z.B. weil die Datenträgerapplikation nur einen sehr eingeschränkten und auf die Endgeräteapplikation genau abgestimmten Funktionsumfang besitzt. Bei dieser Ausführungsvariante würden die Anbieter von Datenträgerapplikationen also nicht mehr vollständige Datenträgerapplikationen mit umfassendem Funktionsumfang bereitstellen, sondern lediglich noch genau auf die einzelnen Endgeräteapplikationen abgestimmte, reduzierte Versionen solcher Datenträgerapplikationen. Hierbei wäre ein Vorteil, dass der Verwaltungsaufwand hinsichtlich der Zugriffsrechte bezüglich einiger oder gar aller Endgeräteapplikationen reduziert wäre oder sogar ganz wegfallen würde.

Nachdem die Sicherheitsapplikation die extrahierten Aktualisierungsdaten von der Programmierschnittstelle erhalten hat, nimmt sie die erforderlichen Aktualisierungen der Zertifikatliste und Zugriffsrechteliste vor und bereitet die Datenträgerapplikation zur Installation in dem Datenträger vor. Diese Installationsvorbereitung kann z.B. Dekodierungs- und kryptographische Operationen umfassen, z.B. die Entschlüsselung des Bytecodes der Datenträgerapplikation, sofern dieser von dem Anbieter der Datenträgerapplikation aus Sicherheitsgründen verschlüsselt in das Endgeräteapplikationszertifikat integriert wurde. Bei einer solchen Ende-zu-Ende-Verschlüsselung zwischen dem Anbieter der Datenträgerapplikation und der Sicherheitsapplikation liegen vorzugsweise nur diesen beiden Stellen die erforderlichen, z.B. geheimen symmetrischen Schlüssel vor. Anschließend wird die vorbereitete, installierbare Version der Datenträgerapplikation an eine Installationseinrichtung des Datenträgers übergeben, z.B. an eine hierfür zuständige Datenträgerverwaltung, und von dieser installiert.

Sofern das Betriebssystem des Datenträgers gemäß dem "Global-Plattform"-Standard eingerichtet ist, wird die Installation der neuen Datenträgerapplikation von einem so genannten "Card Manager" übernommen, der die zentrale Datenträgerverwaltung des Datenträgers repräsentiert. Hierbei übernimmt die auf dem Telekommunikationsendgerät laufende Programmierschnittstelle eine Vermittler- oder "Proxy"-Funktion zwischen der Sicherheitsapplikation und dem "Card Manager", indem die zu installierende Datenträgerapplikation zunächst von der Sicherheitsapplikation an die Programmierschnittstelle mit einer Installationsanweisung gegenüber der Datenträgerverwaltung weitergeleitet wird und die Programmierschnittstelle die zu installierende Datenträgerapplikation anschließend an die Datenträgerverwaltung ebenfalls mit einer entsprechenden Installationsanweisung weitergibt. Dort wird die installierbare Version der Datenträgerapplikation schließlich installiert. Da die Datenträgerapplikation bei der Verwendung der Programmierschnittstelle als "Proxy" die sichere Umgebung des Datenträgers temporär wieder verlässt, kann eine weitere (oder entsprechend erweiterte) Ende-zu-Ende-Verschlüsselung zwischen der Sicherheitsapplikation und der Datenträgerverwaltung vorgesehen sein.

Im Rahmen der oben beschriebenen Ausführungsformen ist es selbstverständlich auch möglich, dass ein Endgeräteapplikationszertifikat Aktualisierungsdaten für mehrere Datenträgerapplikationen - gegebenenfalls von unterschiedlichen Anbietern - umfasst, z.B. zumindest für eine bereits installierte Datenträgerapplikation und für zumindest eine neu zu installierende Datenträgerapplikation. Hierzu muss das Endgeräteapplikationszertifikat von jedem einzelnen beteiligten Anbieter von Datenträgerapplikationen signiert werden, so dass mehrere Signaturen vorliegen und verifiziert werden müssen. Die Sicherheitsapplikation konfiguriert dann jede dieser Datenträgerapplikationen gemäß den Vorgaben der zugeordneten Aktualisierungsdaten.

Ein erfindungsgemäßer sicherer Datenträger beschränkt sich nicht nur auf Mobilfunkkarten, z.B. (U)SIM-Mobilfunkkarten oder dergleichen, sondern kann auch eine erfindungsgemäß eingerichtete, insbesondere mit einer Sicherheitsapplikation ausgestattete digitale Speicherkarte sein, zum Beispiel eine microSD-Karte, sichere Multimediakarte oder dergleichen. Insbesondere umfasst der erfindungsgemäße sichere Datenträger einen eigenen Prozessor und eigene lauffähige Applikationen. Der Datenträger ist beispielsweise insbesondere ein in das Telekommunikationsendgerät einsetzbarer und aus dem Telekommunikationsendgerät entfernbarer Datenträger. Alternativ ist der Datenträger ein zur festen Implementierung in ein Telekommunikationsendgerät eingerichteter Datenträger, z.B. ein Embedded Secure Element oder Embedded Smart Card Chip zur festen Implementierung in ein Telekommunikationsendgerät, und wird z.B. beim Endgerätehersteller in ein Telekommunikationsendgerät eingesetzt und fest implementiert, so dass er durch einen Nutzer nicht (oder zumindest nicht zerstörungsfrei) aus dem Endgerät entfernbar ist, insbesondere ein NFC-Chip für ein NFC-fähiges Telekommunikationsendgerät. Das Betriebssystem des Datenträgers basiert vorzugsweise auf Java oder Java-Card und kann gemäß dem Global-Plattform-Standard ausgestaltet sein. Sowohl die Datenträgerapplikationen als auch die Sicherheitsapplikation sind vorzugsweise so genannte Applets bzw. Java-Applets oder dergleichen.

Ein erfindungsgemäßes Telekommunikationsendgerät ist wie oben beschrieben eingerichtet und umfasst insbesondere eine Programmierschnittstelle, über die standardisiert auf den Datenträger zugegriffen werden kann. Es ist vorzugsweise ein Smartphone mit Android-Betriebssystem und darauf lauffähigen, so genannten Android-"Apps". Darüber hinaus kann das Telekommunikationsendgerät aber auch ein sonstiges, möglicherweise portables Computerendgerät sein, z.B. ein persönlicher digitaler Assistent (PDA), ein tragbarer Computer, ein Tablet-PC oder dergleichen, in den ein sicherer Datenträger zur Bereitstellung einer Telekommunikations- oder Mobilfunkverbindung und/ oder von abgesichertem Speicherplatz eingesetzt werden kann. Die Erfindung ist jedoch nicht auf das Android-Betriebssystem beschränkt, sondern kann prinzipiell auf jedem geeigneten Smartphone- oder Computer-Betriebssystem realisiert werden.

Weitere Merkmale und Vorteile der Erfindung ergeben sich aus der folgenden Beschreibung von erfindungsgemäßen Ausführungsbeispielen sowie weiteren Ausführungsalternativen im Zusammenhang mit den beiliegenden Zeichnungen, die zeigen:
- Figur 1: einen schematischen Verfahrensablauf zweier bevorzugter Ausführungsformen der Erfindung;
- Figur 2: eine schematische Übersicht der bei einer ersten Ausführungsform gemäß Fig. 1 zum Einsatz kommenden Einrichtungen;
- Figur 3: eine schematische Übersicht der bei einer zweiten Ausführungsform gemäß Fig.1 zum Einsatz kommenden Einrichtungen;
- Figur 4: eine schematische Übersicht über Endgerätapplikationszertifikate gemäß bevorzugter Ausführungsformen der Erfindung; und
- Figur 5: ein Beispiel eines Endgeräteapplikationszertifikats mit Aktualisierungsdaten.

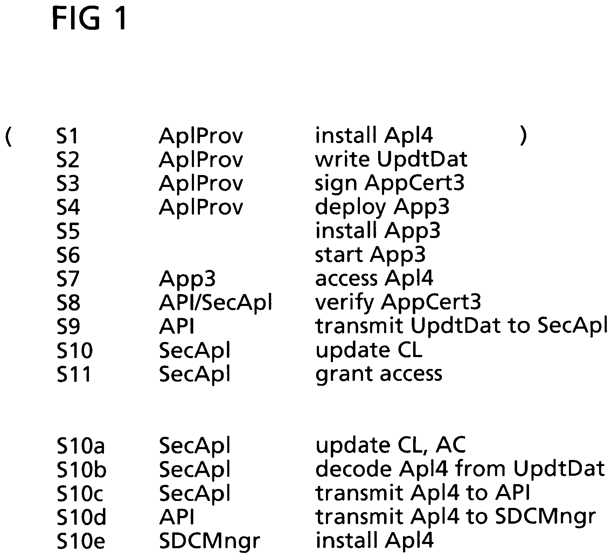

Figur 1 zeigt den Verfahrensablauf des erfindungsgemäßen Verfahrens zum Aktualisieren eines Datenträgers durch Aktualisieren oder Installieren einer auf einem sicheren Datenträger 400 ausführbaren Datenträgerapplikation 110 mit anschließender Konfiguration der Datenträgerapplikation 110. Hierbei entsprechen die Verfahrensschritte S1 bis S11 einer ersten bevorzugten Ausführungsform der Erfindung, die die Aktualisierung einer bereits in Schritt S1 installierten Datenträgerapplikation 110 betrifft, während die Schrittfolge S2 bis S9, S10a bis S10e, S11 einer zweiten bevorzugten Ausführungsform der Erfindung entspricht, die die Installation einer neuen Datenträgerapplikation 110 in Schritt S10a betrifft. Beide Ausführungsformen sind keine Alternativen, sondern können gemeinsam eingesetzt und implementiert werden.

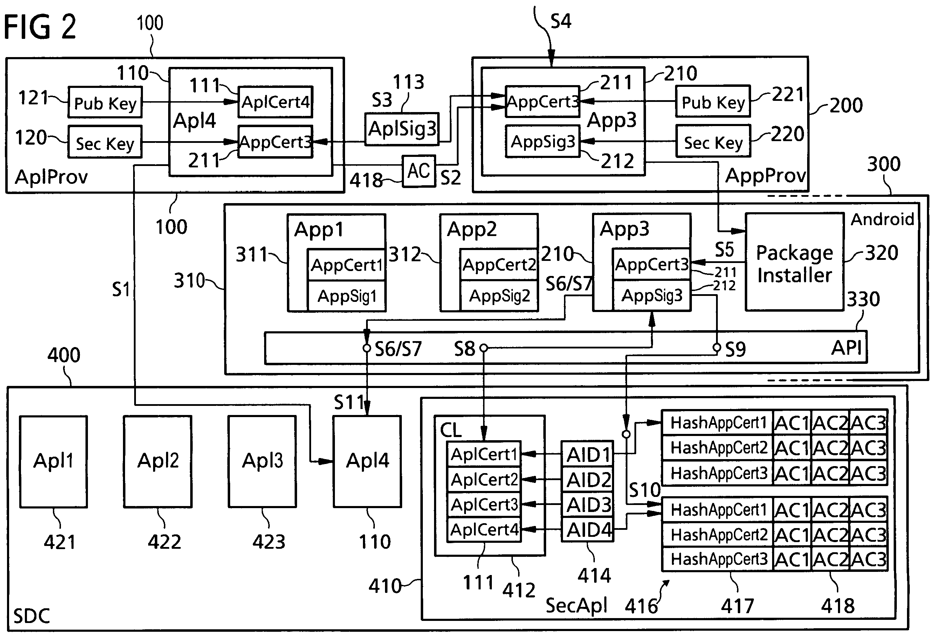

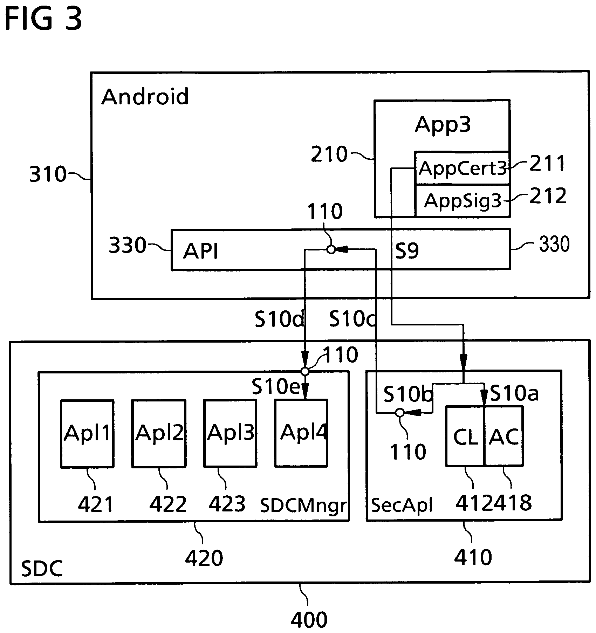

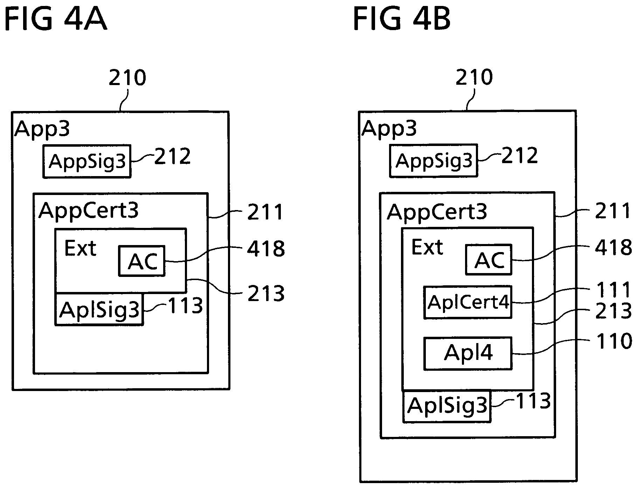

Nachfolgend wird die erste Ausführungsform im Zusammenhang mit den Figuren 2 und 4a und die zweite Ausführungsform im Zusammenhang mit den Figuren 3 und 4b erläutert. Jedoch betreffen beide Ausführungsformen ein Telekommunikationsendgerät in Form eines modernen Smartphones 300, auf dem das Kleincomputer-Betriebssystem "Android" 310 der Firma Google installiert ist. Natürlich ist die Erfindung auch auf andere Computerformate mit anderen Betriebssystemen sinnvoll abwendbar und darauf implementierbar, z.B. auf persönliche digitale Assistenten (PDA), Laptops, Notebooks, Tablet-PCs und sonstige portable Kleincomputer, die häufig auch Telekommunikations- oder Mobilfunkfunktionalitäten bereitstellen.

Die diversen auf dem Android-Smartphone 300 lauffähigen Endgeräteapplikationen sind demnach sogenannte "Apps" 210,311,312 (App3, App1, App2), also speziell auf die Ressourcen, Einsatzbereiche und Anwendungen von Smartphones 300 angepasste Applikationen, die z.B. aus dem Android-Marketplace heruntergeladen und auf dem Smartphone 300 installiert werden können. Neben dem Android-Betriebssystem 310 mit den darunter laufenden Android-Apps 210, 311, 312 existieren aber auch noch weitere Smartphone-Betriebssysteme mit spezialisierten Smartphone-Applikationen, auf denen die vorliegende Erfindung auch implementiert werden kann. Android eignet sich aufgrund seines Open-Source-Konzepts jedoch gut für die nachfolgende beispielhafte Erläuterung der Erfindung.

Beteiligt an dem Verfahren ist neben dem Smartphone 300 ein sicherer digitaler Datenträger in Form einer SD-Karte 400 (SDC), die, eingefügt in einen hierfür vorgesehenen Steckplatz des Smartphones 300, einen sicheren Speicher bzw. eine sichere Speichererweiterung des Smartphones 300 repräsentiert. Die SD-Karte 400 umfasst vorzugsweise ein Java-basiertes Betriebssystem, z.B. Java-Card oder dergleichen, so dass die auf der SD-Karte 400 installierten Datenträgerapplikationen 110, 421, 422, 423 (Apl4, Apl1, Apl2, Apl3) Applets bzw. Java-Applets sind. Selbstverständlich sind als sichere Datenträger 400 gemäß der vorliegenden Erfindung auch anderweitige in einem Smartphone 300 einsetzbare Datenträger mit Prozessor und weiteren Rechenressourcen geeignet, zum Beispiel (U)SIM-Mobilfunkkarten, microSD-Karten, sichere Multimediakarten und dergleichen. Auch können diese Datenträger mit beliebigen Smartcard- oder Speicherkarten-Betriebssystemen und darauf lauffähigen Applikationen ausgestattet sein.

Ein besonderes auf der SD-Karte 400 installiertes Applet ist das sogenannte Sicherheits-Applet 410 (SecApl, "security applet"), welches im Zusammenhang mit dem Zugriff einer App 210 auf ein Applet 110 und mit der Aktualisierung eines Applets 110 Sicherheits- und Kontrollfunktionen übernimmt. Insofern wird die verfahrensgemäß abschließende Konfiguration eines Applets 110 von dem Sicherheits-Applet 410 durchgeführt oder zumindest initiiert.

Das Sicherheits-Applet 410 verwaltet eine Sicherheitsstruktur, umfassend eine Zertifikatliste 412 (CL), in der verschiedene Datenträgerapplikationszertifikate in Form von Applet-Zertifikaten 111 (AplCert1 bis AplCert4) abgelegt sind. Ferner verwaltet das Sicherheits-Applet 410 auch eine oder mehrere Zugriffsrechtelisten 416, die über eine Applet-Identifikation 414 (AID1 bis AID4) den Zertifikaten 111 der Zertifikatliste 412 zugeordnet sind. In den Zugriffsrechtelisten 416 sind wiederum App-Identifikationen 417 (HashAppCert1 bis HashAppCert3) niedergelegt, die jeweils eine Liste 416 von Zugriffsrechten 418 (AC1, AC2, AC3, "access condition") adressieren, welche die Zugriffsrechte 418 der durch die App-ID 417 bezeichneten App 210 auf dasjenige Applet 110 angeben, dessen Applet-ID 414 auf die betreffende Zugriffsrechteliste 416 verweist.

Sofern eine App 210 auf ein Applet 110 zugreifen muss, kann das Sicherheits-Applet 410 über die jeweilige Applet-ID 414 prüfen, ob die betreffende App 210 die notwendigen Zugriffsrechte 418 besitzt. Identifiziert werden die der App 210 über die Zugriffsrechteliste 416 zugeordneten Zugriffsrechte 418 durch die App-ID 417, die einem Hash-Wert des App-Zertifikats 211 entspricht, der bei jeder Prüfung der Zugriffsrechte 418 erneut gebildet wird.

Für den Fall, dass eine App 210 einen Zugriff auf ein Applet 110 benötigt, dessen Zugriffsrechte 418 dies nicht erlauben bzw. welches noch gar nicht als Applet 110 auf der SD-Karte 400 installiert ist, kann eine entsprechende Aktualisierung des Applets 110 erfolgen (d.h. eine Konfiguration des Applet 110 durch eine Aktualisierung der Zugriffsrechte 418 zwischen dem Applet 110 und anderen Applets und/oder der Installation des Applets 110), indem die hierfür benötigten Aktualisierungsdaten in ein Endgeräteapplikationszertifikat in Form eines App-Zertifikats 211 (AppCert3) gemäß dem Verfahren der Fig.1 eingebracht werden und transparent für das Android-Betriebssystem 310 an das Sicherheits-Applet 410 auf der SD-Karte 400 weitergeleitet werden, so dass dort eine den Aktualisierungsdaten entsprechende Konfiguration des Applets 110 erfolgen kann.

Gemäß einer ersten Ausführungsform wird die Aktualisierung der Zugriffsrechte 418 eines Applets Apl4110 wie folgt vorgenommen: In einem Schritt S1 ("install Apl4") wird zunächst das Applet Apl4110 von dem Applet-Anbieter 100 (AplProv) oder zumindest auf dessen Veranlassung auf der SD-Karte 400 installiert, beispielsweise im Rahmen eines Herstellungsprozesses der SD-Karte 400, z.B. bei deren Initialisierung oder Personalisierung. Hierbei werden auch die zu diesem Zeitpunkt bekannten Zugriffsrechte 418 verschiedener Apps 311, 312 (App1, App2) auf dieses Applet 110 (Apl4) in dem Sicherheits-Applet 410 der SD-Karte 400 hinterlegt.

Die Schritte S2 bis S11 betreffen dann die Konfiguration des Applets 110 hinsichtlich der nachträglichen Aktualisierung der Zugriffsrechte 418 der neu zu installierenden App 210 (App3) auf das bereits installierte Applet 110 (Apl4). Hierzu ist in dem Smartphone 300, vorzugsweise als Ergänzung oder Erweiterung des Android-Betriebssystems 310, eine Programmierschnittstelle 330 (API) zum standardisierten Zugriff auf die SD-Karte 400 installiert. Die API 330 wirkt mit dem Sicherheits-Applet 410 zusammen, um eine sichere Prozedur zur nachträglichen Aktualisierung des Applets 110 zu implementieren.

Ausgangspunkt dieser Aktualisierung ist das App-Zertifikat 211, welches Teil des Installationspakets der neu zu installierenden App 210 ist und von einer vertrauenswürdigen Stelle auf den öffentlichen Schlüssel 221 des App-Anbieters 200 (AppProv) der App 210 ausgestellt ist. Neben dem App-Zertifikat 211 existiert im Installationspaket der App 210 auch die Signatur 212 (AppSig3) der App 210, mit der der App-Anbieter 200 mit Hilfe seines geheimen Schlüssels 220 die Echtheit der App 210 garantiert.

Bei bereits installierten Applets 421, 422, 423 (Apl1, Apl2, Apl3) kann die API 330 in Kooperation mit dem Sicherheits-Applet 410 die Zugriffsrechte 418 einer auf ein Applet 421,422,423 zugreifenden App 311, 312 prüfen.

Im Schritt S2 ("write UpdtDat") integriert der Applet-Anbieter 100 die Aktualisierungsdaten in Form von Zugriffsrechten 418 in das App-Zertifikat 211, um dem Sicherheits-Applet 410 auf diesem Wege die von dem Applet-Anbieter 100 bereitgestellten und von der App 210 benötigten Zugriffsrechte 418 zur entsprechenden Konfiguration des Applets 110 zu Verfügung kommen zu lassen.

Im Schritt S3 ("sign AppCert3") stellt der Anbieter 100 des zu aktualisierenden Applets 110 mit Hilfe seines geheimen Schlüssels 120 eine Signatur 113 (AplSig3) des um die Aktualisierungsdaten ergänzten App-Zertifikats 211 aus, welche mit dem App 210 verbunden wird, z.B. indem die Signatur 113 in ein Installationspaket der App 210 eingebracht wird.

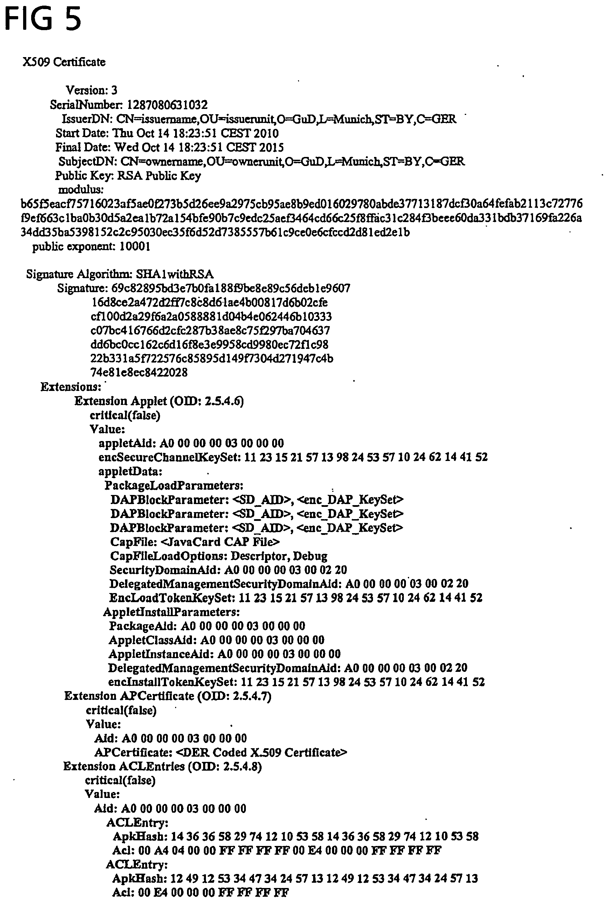

Figur 4a zeigt die wesentlichen Inhalte eines solches Installationspakets der App App3 210, umfassend die Signatur 212 des App-Anbieters 200, das App-Zertifikat 211 und die Signatur 113 des Applet-Anbieters 100. Bei dem vorliegenden Ausführungsbeispiel handelt es sich um ein App-Zertifikat 211 gemäß dem X.509-Zertifikatformat, so dass die Aktualisierungsdaten in Form von Zugriffsrechten 418 in die gemäß dem X.509-Standard vorgegebenen Erweiterungsfelder 213 (Ext) eingetragen werden können. Diese gemäß dem X.509-Standard vorgegebenen Erweiterungsfelder können weitere Daten aufnehmen, die mit der eigentlichen Funktion des Zertifikats 211, nämlich dem vertrauenswürdigen Bereitstellen eines öffentlichen Schlüssels 221, nicht im Zusammenhang stehen müssen. Ein Beispiel für ein App-Zertifikat 211 gemäß dem X.509-Standard mit darin integrierten Erweiterungsdaten ("Extensions") zeigt Fig. 5.

Der Mechanismus der Erweiterungsfelder 213 wird genutzt, um die Aktualisierungsdaten derart in das App-Zertifikat 211 einzubringen, dass sie für das Smartphone 300 und seine Funktionen und Software-Komponenten - eventuell mit Ausnahme der API 330, die eine Programmierschnittstelle der SD-Karte 400 ist - transparent sind. Das App-Zertifikat 211 repräsentiert also ein Containerdatenformat, das in den Erweiterungsfeldern 213 Daten von au-βerhalb des Smartphones 300, z.B. von dem Applet-Anbieter 100, transparent durch das Smartphone 300 hindurch bis in die SD-Karte 400 bzw. dessen Sicherheits-Applet 410 transportieren kann. Die in den Erweiterungsfeldern 213 des App-Zertifikats 211 abgelegten Aktualisierungsdaten bleiben von dem Smartphone 300 deshalb unberücksichtigt.

Die Signatur 113 des Applet-Anbieters 100 ist ein mit dem geheimen Schlüssel 120 des Applet-Anbieters 100 verschlüsseltes Chiffrat des App-Zertifikats 211 und kann in dem Installationspaket der App 210 separat vorliegen (vgl. Fig. 4). Die Signatur 113 kann beispielsweise gemäß dem X.509-Standard in das Signaturfeld eingebracht werden. Das App-Zertifikat 211 kann in den Erweiterungsfeldern 213 (noch weitere) Informationen des Applet-Anbieters 100 aufnehmen, die das Applet 110 betreffen, beispielsweise das Applet-Zertifikat 111 mit dem öffentlichen Schlüssel 121 des Applet-Anbieters 100 oder den Bytecode des gesamten Applets 110, so wie es Gegenstand der zweiten Ausführungsform der Erfindung ist (vgl. Fig. 4b). Ebenso kann auch die eindeutige App-ID 417 als Erweiterung 213 in dem App-Zertifikat 211 vorliegen.

Die derart ausgestattete App 210 wird dann von dem Applet-Anbieter 100 im Schritt S4 ("deploy App3") in einem öffentlichen App-Markt potentiellen Nutzern zur Installation auf ihrem Smartphone angeboten, beispielsweise im so genannten "Google Market Place". Von dort wird die App 210 im Schritt S5 ("install App3") heruntergeladen und unter dem Android-Betriebssystem 310 in dem Smartphone 300 installiert.

Da die im "Market Place" oder einer anderen öffentlichen Plattform angebotene App 210 die Signatur 113 des Applet-Anbieters 100 trägt, welche über das gesamte App-Zertifikat 211 mitsamt den Zugriffsrechten 418 gebildet ist, repräsentiert die Signatur 113 eine Autorisierung des Zugriffs der App 210 auf das Applet 110 durch den Applet-Anbieter 100.

Im Schritt S5 wird die App 210 unter dem Android-Betriebssystem 310 mittels einer speziellen Installationsroutine 320 ("package installer") installiert, indem die Installationsroutine 320 zunächst die Signatur 212 des App-Anbieters 200 prüft. Hierzu wird die Signatur 212 mit dem öffentlichen Schlüssel 221 des App-Anbieters 200 entschlüsselt und mit dem signierten Klartext der App 210 verglichen. Den öffentlichen Schlüssel 221 erhält die Installationsroutine 320 aus dem der App 210 beiliegenden App-Zertifikat 211, welches die Vertrauenswürdigkeit des öffentlichen Schlüssels 221 garantiert.

Im Schritt S6 ("start App3") wird die installierte App 210 von einem Benutzer des Smartphones 300 gestartet und diese versucht dann in einem Schritt S7 ("access Apl4") auf das Applet Apl4110 zuzugreifen. Hierzu hat die App App3 210 jedoch zunächst noch keine Zugriffsrechte 418 in der Zugriffsrechteliste 416 des Sicherheits-Applet 410. Die benötigten Zugriffsrechte 418 liegen bisher lediglich in dem App-Zertifikat 211 vor.

Anschließend wird im Schritt S8 ("verify AppCert3") das App-Zertifikat 211 von der API 330 verifiziert, indem die Signatur 113 mit dem öffentlichen Schlüssel 121 des Applet-Anbieters 100 entschlüsselt und mit dem Klartext des App-Zertifikats 211 verglichen wird. Abweichend hiervon kann die Verifikation des App-Zertifikats 211 und die sich daran anschließende Aktualisierung der Zugriffsrechteliste 416 auch unmittelbar nach oder sogar bei der der Installation der App 210 in Schritt S5 erfolgen. Die Verifikation des Schritts S8 kann bei einer bevorzugten Ausführungsvariante auch in der sicheren Umgebung der SD-Karte 400 von dem Sicherheits-Applet 410 vorgenommen werden. In diesem Fall wird das App-Zertifikat 211 von der Programmierschnittstelle 330 an das Sicherheits-Applet 410 durchgereicht.

Bei der Verifikation der Signatur 113 erhält die API 330 (oder die SicherheitsApplikation 410) den öffentlichen Schlüssel 121 des Applet-Anbieters 100 aus der Zertifikatliste 412, in der das Applet-Zertifikat 111 bei der in Schritt S1 durchgeführten Installation des Applets 110 in der SD-Karte 400 hinterlegt wurde. Sofern die Verifikation der Signatur 113 erfolgreich ist, werden die in dem Erweiterungsfeld 213 des App-Zertifikats 211 angegebenen Aktualisierungsdaten, also zumindest die Zugriffsrechte 418, von der API 330 extrahiert und in Schritt S9 ("transmit UpdtDat to SecApl") an das Sicherheits-Applet 410 zur Konfiguration des Applets 110 weitergegeben. Falls die Verifikation in Schritt S8 durch das Sicherheits-Applet 410 durchgeführt wird, benachrichtigt dieses bei erfolgreicher Verifikation die API 330 dahingehend, dass die Aktualisierungsdaten 418 aus dem App-Zertifikat 211 extrahiert werden können. Alternativ kann auch das Sicherheits-Applet 410 die Aktualisierungsdaten 418 aus dem App-Zertifikat 211 extrahieren. Beim oder nach dem Extrahieren der Aktualisierungsdaten 418 muss deren Integrität jedoch nicht weiter geprüft werden, da diese bereits durch die Verifikation der Signatur 113 des Applet-Anbieters 100 in Schritt S8 geprüft wurde.

In dem Schritt S10 ("update CL") konfiguriert das Sicherheits-Applet 410 schließlich das Applet 110, indem die Zugriffsrechteliste 416 mit den Aktualisierungsdaten in Form der Zugriffsrechte 418 der App 210 auf das Applet 110 aktualisiert werden. Hierzu wird die relevante Zugriffsrechteliste 416 über die Applet-ID 414 ermittelt. Danach wird die App-ID 417 in Form eines SHA-1-Hashwerts des App-Zertifikats 211 gebildet und mit den bereits in der Zugriffsrechteliste 416 verzeichneten App-IDs 417 verglichen bzw. dort mit den entsprechenden Zugriffsrechten 418 neu eingetragen. Bei einem späteren Zugriff der App 210 auf das Applet 110 kann das Sicherheits-Applet 410 über die Applet-ID 414 und die App-ID 417 jederzeit prüfen, ob die benötigten Zugriffsrechte 418 vorliegen. Schließlich gewährt die SicherheitsApplikation 410 in Schritt S11 ("grant access") den Zugriff auf das Applet 110 durch die App 210.

In einer zweiten Ausführungsform der Erfindung im Zusammenhang mit den Figuren 3 und 4b wird dem Sicherheits-Applet 410 ein bisher nicht auf der SD-Karte 400 installiertes Applet 110 mittels der Containerdatenstruktur des App-Zertifikats 211 bereitgestellt. Die Konfiguration des Applets 110 umfasst bei dieser Ausführungsform die Installation des Applets 110 auf der SD-Karte 400 und die Einrichtung der entsprechenden Zugriffsrechte 418. Der weitere Ablauf dieser Ausführungsform ergibt sich aus der Sequenz der Schritte S2 bis S9, S10a bis S10e und S11 der Fig.1 durch eine mit der ersten Ausführungsform vergleichbare Wechselwirkung zwischen der API 330 auf dem Smartphone 300 und dem Sicherheits-Applet 410 auf der SD-Karte 400.

Der Schritt S1 der vorzeitigen Installation des Applets 110 entfällt hierbei natürlich, da es gerade der Gegenstand dieser Ausführungsform ist, das Applet 110 nachträglich zu installieren. Ferner fällt bei dieser Ausführungsform der Konfigurationsschritt S10 weg; vielmehr wird das Applet 110 mittels der Schritte S10a bis S10e konfiguriert und installiert.

In Schritt S2 werden von dem Applet-Anbieter 100 nicht nur, wie im Zusammenhang mit der ersten Ausführungsform geschildert, Zugriffsrechte 418 der App 210 auf das Applet 110 in das App-Zertifikat 211 integriert, sondern auch das Applet 110 selbst, bzw. dessen Bytecode, sowie das Applet-Zertifikat 111 mit dem öffentlichen Schlüssel 121 des Applet-Anbieters 100. In Schritt S3 signiert der Applet-Anbieter 100 das App-Zertifikat 211 mit den gesamten Aktualisierungsdaten mit seinem geheimen Schlüssel 120 und bildet die Signatur 113. Bei dieser Ausführungsform umfasst das Installationspaket der App 210 neben den Signaturen 212 und 113 ein App-Zertifikat 211 gemäß Fig. 4b, umfassend Erweiterungsfelder 213 gemäß dem X.509-Standard mit Zugriffsrechten 418, dem Bytecode des zu installierenden Applets 110 und dem Applet-Zertifikat 111.

Insofern befindet sich nach dem Schritt S4 also eine App 210 in dem "Market Place" oder auf einer sonstigen öffentlichen Download-Plattform, welche in Form eines Datencontainers auch ein auf der SD-Karte 400 zu installierendes Applet 110 umfasst, autorisiert durch den Applet-Anbieter 100 mittels der Signatur 113 über das gesamte App-Zertifikat 211.

Um die Integrität der Aktualisierungsdaten in der Erweiterung 213, insbesondere des Bytecodes des Applets 110, sicherzustellen, ist eine Ende-zu-Ende-Verschlüsselung zwischen dem Applet-Anbieter 100 und der SD-Karte 400 bzw. deren Sicherheits-Applet 410 vorgesehen. Diese kann beispielsweise durch eine symmetrische AES-Verschlüsselung realisiert werden, wobei der gemeinsame geheime Schlüssel nur dem Applet-Anbieter 100 und dem Sicherheits-Applet 410 vorliegt.

Der weitere Ablauf der Schritte S5 bis S8 ist dann analog zu demjenigen der ersten Ausführungsform. Wichtig ist hier lediglich, dass im Schritt S8 das App-Zertifikat 211 und dessen Erweiterungen 213 geprüft werden, indem die Signatur 113 mit dem öffentlichen Schlüssel 121 des Applet-Anbieters 100 verifiziert wird, dessen Applet-Zertifikat 111 (noch) nicht in der Zertifikatliste 412 vorliegt, sondern in einem Erweiterungsfeld 213 des App-Zertifikats 211. Der Verifikationsschritt S8 wird vorzugsweise von dem Sicherheits-Applet 410 durchgeführt, so dass die Verifikation in der abgesicherten Umgebung der SD-Karte 400 stattfinden kann.

Nach erfolgreicher Verifikation der Signatur 113 des Applet-Anbieters 100 extrahiert die API 330 in Schritt S9 die Aktualisierungsdaten (also die Zugriffsrechte 418, das Applet 110 und das Applet-Zertifikat 111) aus dem App-Zertifikat 211 und leitet diese an das Sicherheits-Applet 410 weiter. Wie bei der ersten Ausführungsform können die Aktualisierungsdaten aber auch direkt von dem Sicherheits-Applet 410 extrahiert werden.

Vergleichbar mit dem Schritt S10 werden dann in Schritt S10a ("update CL, AC") die Zugriffsrechte 418 in der entsprechenden Zugriffsrechteliste 416 hinterlegt - identifiziert durch den Hash-Wert des App-Zertifikats 211 als App-ID 417. Hierbei wird dann auch die Applet-ID 414 in dem Sicherheits-Applet 410 hinterlegt und das aus der Erweiterung 213 des App-Zertifikats 211 extrahierte Applet-Zertifikat 111 mit dem öffentlichen Schlüssel 121 des Applet-Anbieters 100 wird in der Zertifikatliste 412 hinterlegt. Es wird insofern eine gänzlich neue Zugriffsrechteliste 416 ausgehend von der Applet-ID 414 erstellt, in der, adressiert durch die App-ID 417 in Form eines Hashwerts des App-Zertifikats 211, die neuen Zugriffsrechte 418 der App 210 auf das Applet 110 hinterlegt werden.

In Schritt S10b ("decode Apl4 from UpdtDat") wird der extrahierte Bytecode des Applets 110, der dem Sicherheits-Applet 410 noch in der von dem Applet-Anbieter 100 verschlüsselten oder kodierten Form vorliegt, in der sicheren Umgebung des Sicherheits-Applets 410 dekodiert und/ oder entschlüsselt. In Schritt S10b werden auch sämtliche weiteren erforderlichen Operationen zur Vorbereitung der Installation des Applets 110 durchgeführt.

Vorzugsweise wird der Bytecode des Applets 110 dann aber nicht direkt von dem Sicherheits-Applet 410 installiert. Gemäß dem im Smartphone-Bereich zumindest zukünftig relevanten Global-Plattform-Standard (vgl. *www.globalplatform. org*) ist eine solche direkte Installation nämlich nicht vorgesehen. Stattdessen ist die Installation eines Applets 110 über das Smartphone 300 bzw. dessen API 330 vorzunehmen. Somit fungiert die API 330 in den verbleibenden Schritten S10c bis S10e als Vermittler- bzw. Proxy-Einheit zwischen dem Sicherheits-Applet 410 und dem "Card-Manager" 420 (SDCMngr) der SD-Karte 400, der die zentrale Verwaltungseinheit der SD-Karte 400 darstellt und als solche für die Installation neuer Applets 110 verantwortlich ist.

Um die Datenintegrität des Bytecodes des Applets 110 zu gewährleisten, kann in Schritt S10b eine weitere Verschlüsselung des Applets 110 durchgeführt werden, da das Applet 110 die sichere Umgebung des Sicherheits-Applets 410 wieder verlässt und über die potentiell unsichere API 330 dem Card Manager 420 zur Verfügung gestellt wird. Insofern ist entweder eine weitere Ende-zu-Ende-Verschlüsselung zwischen dem Sicherheits-Applet 410 und dem Card Manager 420 vorgesehen, oder der Bytecode des Applets 110 wird nicht bereits in Schritt S10b im Sicherheits-Applet 410 entschlüsselt, sondern erst im Schritt S10e in dem Card Manager 420 im Rahmen der Installation des Applets 110. Im letzteren Fall besteht eine Ende-zu-Ende-Verschlüsselung zwischen dem Applet-Anbieter 100 und dem Card-Manager 420, wobei die erforderlichen Schlüssel in der SD-Karte 400, bzw. in dem Sicherheits-Applet 410 und/ oder in dem Card Manager 420 sicher verwahrt werden.

In den Schritten S10c und S10d wird dann, entsprechend dem Global-Plattform-Standard, das Applet 110 von dem Sicherheits-Applet 410 an die API 330 übertragen und von dieser an den Card-Manager 420 zur letztendlichen Installation weitergeleitet. Die API 330 fungiert also gegenüber dem Card-Manager 420 als Host-Einheit, die die bereitzustellenden Daten, nämlich das Applet 110, ihrerseits von dem Sicherheits-Applet 410 der SD-Karte 400 entgegennimmt.

## Patentansprüche

1. Verfahren zum Aktualisieren eines in einem Telekommunikationsendgerät (300) eingesetzten Datenträgers (400), umfassend Aktualisieren (S1-S11) oder Installieren (S2-S9, S10a-S10e, S11) einer auf einem sicheren Datenträger (400) ausführbaren Datenträgerapplikation (110), **gekennzeichnet durch** die Schritte:
- Integrieren (S2) von Aktualisierungsdaten (418;110,111,418) für die Datenträgerapplikation (110) in ein Endgeräteapplikationszertifikat (211) einer in dem Endgerät (300) zu installierenden Endgeräteapplikation (210);
- Installieren (S5) der Endgeräteapplikation (210) in dem Telekommunikationsendgerät (300) und Extrahieren (S9) der Aktualisierungsdaten (418;110,111,418) aus dem Endgeräteapplikationszertifikat (211); und
- Konfigurieren (S10; S10a, S10e) der Datenträgerapplikation (110) gemäß den Aktualisierungsdaten (418;110,111, 418).

2. Verfahren nach Anspruch 1, **dadurch gekennzeichnet, dass** ein Anbieter (100) der Datenträgerapplikation (110) die Aktualisierungsdaten (418; 110, 111, 418) in das Endgeräteapplikationszertifikat (211) integriert (S2) und das Endgeräteapplikationszertifikat (211) mit einem geheimen Schlüssel (120) signiert (S3).

3. Verfahren nach Anspruch 2, **dadurch gekennzeichnet, dass** eine Signatur (113) des Endgeräteapplikationszertifikats (211) durch eine auf dem Telekommunikationsendgerät (300) installierte Programmierschnittstelle (330) des Datenträgers (400) oder durch den Datenträger (400) selbst verifiziert wird (S8), bevor die Datenträgerapplikation (110) gemäß den Aktualisierungsdaten (418;110,111,418) konfiguriert wird (S10; S10a, S10e).

4. Verfahren nach einem der Ansprüche 1 bis 3, **dadurch gekennzeichnet, dass** die Aktualisierungsdaten (418;110,111,418) derart in das Endgeräteapplikationszertifikat (211) integriert werden (S2), dass sie transparent an den Datenträger (400) weitergeleitet werden können (S9).

5. Verfahren nach einem der Ansprüche 1 bis 4, **dadurch gekennzeichnet, dass** eine in dem Datenträger (400) installierte Sicherheitsapplikation (410) beim Konfigurieren (S10; S10a, S10e) der Datenträgerapplikation (110) eine Zertifikatliste (412) und zumindest eine Zugriffsrechteliste (416) gemäß den Aktualisierungsdaten (418;110,111, 418) aktualisiert (S10; S10a), wobei die Zertifikatliste (412) Datenträgerapplikationszertifikate (111) von in dem Datenträger (400) installierten Datenträgerapplikationen (110, 421, 422, 423) umfasst und die zumindest eine Zugriffsrechteliste (416) Zugriffsrechte (418) von in dem Telekommunikationsendgerät (300) installierten Endgeräteapplikationen (210, 311, 312) auf in dem Datenträger (400) installierte Datenträgerapplikationen (110, 421-423) angibt.

6. Verfahren nach Anspruch 5, **dadurch gekennzeichnet, dass** eine Programmierschnittstelle (330), insbesondere eine Programmierschnittstelle (330) nach Anspruch 3, die Aktualisierungsdaten (418;110,111, 418) aus dem Endgeräteapplikationszertifikat (211) extrahiert und an die Sicherheitsapplikation (410) weiterleitet (S9).

7. Verfahren nach Anspruch 5 oder 6, **dadurch gekennzeichnet, dass** eine bzw. die Programmierschnittstelle (330), insbesondere nach Anspruch 3, oder die Sicherheitsapplikation (410) bei einem Zugriff einer auf dem Telekommunikationsendgerät (300) installierten Endgeräteapplikation (210, 311, 312) auf eine in dem Datenträger (400) installierte Datenträgerapplikation (110,421-423) prüft, ob in der zumindest einen Zugriffsrechteliste (416) entsprechende Zugriffsrechte (418) der Endgeräteapplikation (210, 311, 312) eingetragen sind.

8. Verfahren nach einem der Ansprüche 5 bis 7, **dadurch gekennzeichnet, dass** Aktualisierungsdaten (418) in das Endgeräteapplikationszertifikat (211) integriert werden (S2), welche Zugriffsrechte (418) der Endgeräteapplikation (210) auf eine in dem Datenträger (400) installierte Datenträgerapplikation (110) betreffen, und die Datenträgerapplikation (110) konfiguriert wird (S10), indem die Zugriffsrechte (418) derart in der Zugriffsrechteliste (416) hinterlegt werden, dass die Endgeräteapplikation (210) bei einer Ausführung auf dem Telekommunikationsendgerät (300) auf die Datenträgerapplikation (110) zugreifen kann.

9. Verfahren nach Anspruch 8, **dadurch gekennzeichnet, dass** eine bzw. die Programmierschnittstelle (330), insbesondere nach Anspruch 3, die Signatur (113) des Endgeräteapplikationszertifikats (211) mittels eines öffentlichen Schlüssels (121) des Anbieters (100) der Datenträgerapplikation (110) verifiziert (S8), der in dem von der Zertifikatliste (412) umfassten Datenträgerapplikationszertifikat (111) der Datenträgerapplikation (110) hinterlegt ist.

10. Verfahren nach einem der Ansprüche 5 bis 7, **dadurch gekennzeichnet, dass** Aktualisierungsdaten (110, 111, 418) in das Endgeräteapplikationszertifikat (211) integriert werden (S2), welche eine in dem Datenträger (400) zu installierende Datenträgerapplikation (110) betreffen, wobei das Konfigurieren (S10a, S10e) der Datenträgerapplikation (110) ein Installieren der Datenträgerapplikation (110) in dem Datenträger (400) umfasst.

11. Verfahren nach Anspruch 10, **dadurch gekennzeichnet, dass** die Aktualisierungsdaten (110, 111, 418) auch ein Datenträgerapplikationszertifikat (111) mit einem öffentlichen Schlüssel (121) des Anbieters (100) der Datenträgerapplikation (110) betreffen, und dass eine bzw. die Programmierschnittstelle (330), insbesondere nach Anspruch 3, oder die Sicherheitsapplikation (410) die Signatur (113) des Endgeräteapplikationszertifikats (211) mittels des öffentlichen Schlüssels (121) des Anbieters (100) der Datenträgerapplikation (110) verifiziert (S8) und die Sicherheitsapplikation (410) das Datenträgerapplikationszertifikat (111) in die Zertifikatsliste (412) einträgt (S10a).

12. Verfahren nach Anspruch 10 oder 11, **dadurch gekennzeichnet, dass** die Aktualisierungsdaten (110, 111, 418) auch Zugriffsrechte (418) der Endgeräteapplikation (210) auf die zu installierende Datenträgerapplikation (110) betreffen, wobei die Sicherheitsapplikation (410) die Zugriffsrechte (418) in die Zugriffsrechteliste (412) einträgt (S10a).

13. Verfahren nach Anspruch 6 und einem der Ansprüche 10 bis 12, **dadurch gekennzeichnet, dass** die Programmierschnittstelle (330) beim Installieren (S10e) der Datenträgerapplikation (110) die Datenträgerapplikation (110) von der Sicherheitsapplikation (410) entgegennimmt (S10c) und in einer Datenträgerverwaltung (420) des Datenträgers (400) installiert (S10d, S10e).

14. Verfahren nach einem der Ansprüche 1 bis 13, **dadurch gekennzeichnet, dass** die Aktualisierungsdaten (418;110,111,418) als Erweiterungsdaten (213) in ein Endgeräteapplikationszertifikat (211) gemäß dem X.509-Standard integriert werden (S2).

15. Telekommunikationsendgerät (300), in das ein sicherer Datenträger (400) einsetzbar oder eingesetzt ist, der Datenträger (400) umfassend in dem Datenträger (400) installierte Datenträgerapplikationen (421, 422, 423), sowie eine in dem Datenträger (400) installierte Sicherheitsapplikation (410), die eingerichtet ist, von einem Telekommunikationsendgerät (300), in welches der Datenträger (400) eingesetzt ist, Aktualisierungsdaten (418;110,111, 418) zu empfangen und eine Datenträgerapplikation (110) zu aktualisieren oder zu installieren, indem die Datenträgerapplikation (110) gemäß den Aktualisierungsdaten (418;110,111,418) konfiguriert wird, das Telekommunikationsendgerät (300) umfassend in dem Telekommunikationsendgerät (300) installierte Endgeräteapplikationen (311, 312), **gekennzeichnet durch** eine Programmierschnittstelle (330) des Datenträgers (400), die eingerichtet ist, Aktualisierungsdaten (418;110,111,418) aus einem Endgeräteapplikationszertifikat (211) einer in dem Telekommunikationsendgerät (300) zu installierenden Endgeräteapplikation (210) zu extrahieren und zur Konfiguration einer auf einem in das Telekommunikationsendgerät (300) eingesetzten Datenträger (400) ausführbaren Datenträgerapplikation (110) an den Datenträger (400) weiterzuleiten.

16. Telekommunikationsendgerät (300) nach Anspruch 15, **dadurch gekennzeichnet, dass** ein Betriebssystem (310) des Telekommunikationsendgeräts (300) ein Android-Betriebssystem ist und die Endgeräteapplikationen (210, 311, 312) Android-Apps sind.

17. Telekommunikationsendgerät (300) nach Anspruch 15 oder 16, **dadurch gekennzeichnet, dass** das Telekommunikationsendgerät (300) eingerichtet ist, auf dem Datenträger (400) eine Datenträgerapplikation (110) gemäß einem Verfahren nach einem der Ansprüche 1 bis 14 zu aktualisieren oder zu installieren.

18. Telekommunikationsendgerät (300) nach einem der Ansprüche 15 bis 17, **dadurch gekennzeichnet, dass** die Sicherheitsapplikation (410) eingerichtet ist, eine Signatur (113) eines die Aktualisierungsdaten (418;110,111,418) umfassenden Endgeräteapplikationszertifikats (211) einer in dem Telekommunikationsendgerät (300) zu installierenden Endgeräteapplikation (210) mittels eines Datenträgerapplikationszertifikats (111) zu verifizieren, welches in einer von der Sicherheitsapplikation (410) verwalteten Zertifikatliste (412) oder in dem Endgeräteapplikationszertifikat (211) selbst hinterlegt ist, bevor die Datenträgerapplikation (110) gemäß den Aktualisierungsdaten (418; 110, 111, 418) konfiguriert wird.

19. Telekommunikationsendgerät (300) nach einem der Ansprüche 15 bis 18, **gekennzeichnet durch** eine von der Sicherheitsapplikation (410) verwaltete Zertifikatliste (412) und zumindest eine Zugriffsrechteliste (416), wobei die Zertifikatliste (412) Datenträgerapplikationszertifikate (111) der installierten Datenträgerapplikationen (110, 421-423) umfasst und die zumindest eine Zugriffsrechteliste (416) Zugriffsrechte (418) von in dem Telekommunikationsendgerät (300) installierten Endgeräteapplikationen (210, 311, 312) auf die Datenträgerapplikationen (110, 421-423) umfasst, wobei die Sicherheitsapplikation (410) eingerichtet ist, die Zertifikatliste (412) und die zumindest eine Zugriffsrechteliste (416) gemäß den Aktualisierungsdaten (418;110,111,480) zu aktualisieren.

20. Telekommunikationsendgerät (300) nach einem der Ansprüche 15 bis 19, **dadurch gekennzeichnet, dass** der Datenträger eine (U)SIM-Mobilfunkkarte, eine sichere digitale Speicherkarte oder sichere Multimediakarte ist und/ oder dass ein Betriebssystem (310) des Datenträgers (400) ein Java-basiertes und/ oder Global-Platform-konformes Betriebssystem ist und/ oder dass die Datenträgerapplikationen (110, 421-423) und die Sicherheitsapplikation (410) Java-Applets sind.

21. Telekommunikationsendgerät (300) nach einem der Ansprüche 15 bis 20, **dadurch gekennzeichnet, dass** der Datenträger (400) derart eingerichtet ist, dass eine Datenträgerapplikation (110) gemäß einem Verfahren nach einem der Ansprüche 1 bis 14 aktualisierbar oder installierbar ist.

## Claims

1. A method for updating a data carrier (400) used in a telecommunication end device (300), comprising updating (S1-S11) or installing (S2-S9, S10a-S10e, S11) a data-carrier application (110) executable on a secure data carrier (400), **characterized by** the steps of:
- integrating (S2) update data (418; 110, 111, 418) for the data-carrier application (110) into an end-device application certificate (211) of an end-device application (210) to be installed in the end device (300);
- installing (S5) the end-device application (210) in the telecommunication end device (300) and extracting (S9) the update data (418; 110, 111, 418) from the end-device application certificate (211); and
- configuring (S10; S10a, S10e) the data-carrier application (110) according to the update data (418; 110, 111,418).

2. The method according to claim 1, **characterized in that** a provider (100) of the data-carrier application (110) integrates (S2) the update data (418; 110, 111,418) into the end-device application certificate (211) and signs (S3) the end-device application certificate (211) with a secret key (120).

3. The method according to claim 2, **characterized in that** a signature (113) of the end-device application certificate (211) is verified (S8) by a programming interface (330) of the data carrier (400) installed on the telecommunication end device (300) or by the data carrier (400) itself, before the data carrier application (110) is configured (S10; S10a, S10e) according to the update data (418; 110, 111, 418).

4. The method according to any of the claims 1 to 3, **characterized in that** the update data (418; 110, 111, 418) are integrated (S2) into the end-device application certificate (211) in such a fashion that they can be passed on (S9) to the data carrier (400) in transparent manner.

5. The method according to any of the claims 1 to 4, **characterized in that** a security application (410) installed in the data carrier (400) updates (S10; S10a), upon configuring (S10; S10a, S10e) the data-carrier application (110), a certificate list (412) and at least one access right list (416) according to the update data (418; 110, 111,418), wherein the certificate list (412) comprises data-carrier application certificates (111) of data-carrier applications (110, 421, 422, 423) installed in the data carrier (400) and the at least one access right list (416) states access rights (418) of end-device applications (210, 311, 312) installed in the telecommunication end device (300) to data-carrier applications (110, 421-423) installed in the data carrier (400).

6. The method according to claim 5, **characterized in that** a programming interface (330), in particular a programming interface (330) according to claim 3, extracts the update data (418; 110, 111, 418) from the end-device application certificate (211) and passes them on (S9) to the security application (410).

7. The method according to claim 5 or 6, **characterized in that** a or the programming interface (330), in particular according to claim 3, or the security application (410) checks, upon an access of an end-device application (210, 311, 312) installed on the telecommunication end device (300) to a data-carrier application (110, 421-423) installed in the data carrier (400), whether there are corresponding access rights (418) of the end-device application (210, 311, 312) entered in the at least one access right list (416).

8. The method according to any of the claims 5 to 7, **characterized in that** update data (418) are integrated (S2) into the end-device application certificate (211), which update data relate to access rights (418) of the end-device application (210) to a data-carrier application( 110) installed in the data carrier (400), and the data-carrier application (110) is configured (S10) by the access rights (418) being deposited in such a fashion in the access right list (416) that the end-device application (210), upon an execution on the telecommunication end device (300), can access the data-carrier application (110).

9. The method according to claim 8, **characterized in that** a or the programming interface (330), in particular according to claim 3, verifies (S8) the signature (113) of the end-device application certificate (211) by means of a public key (121) of the provider (100) of the data-carrier application (110), which is deposited in the data-carrier application certificate (111) of the data-carrier application (110) comprised by the certificate list (412).

10. The method according to any of the claims 5 to 7, **characterized in that** update data (110, 111, 418) are integrated (S2) into the end-device application certificate (211), which relate to a data-carrier application (110) to be installed in the data carrier (400), wherein the configuration (S10a, S10e) of the data-carrier application (110) comprises an installation of the data-carrier application (110) in the data carrier (400).

11. The method according to claim 10, **characterized in that** the update data (110, 111, 418) also relate to a data-carrier application certificate (111) with a public key (121) of the provider (100) of the data-carrier application (110), and that a or the programming interface (330), in particular according to claim 3, or the security application (410) verifies (S8) the signature (113) of the end-device application certificate (211) by means of the public key (121) of the provider (100) of the data-carrier application (110) and the security application (410) enters (S10a) the data-carrier application certificate (111) into the certificate list (412).

12. The method according to claim 10 or 11, **characterized in that** the update data (110, 111,418) also relate to access rights (418) of the end-device application (210) to the data-carrier application (110) to be installed, wherein the security application (410) enters (S10a) the access rights (418) into the access right list (412).

13. The method according to claim 6 and to any of the claims 10 to 12, **characterized in that** the programming interface (330), upon installing (S10e) the data-carrier application (110), receives (S10e) the data-carrier application (110) from the security application (410) and installs (S10d, S10e) it in a data carrier management (420) of the data carrier (400).

14. The method according to any of the claims 1 to 13, **characterized in that** the update data (418; 110, 111, 418) are integrated (S2) according to the X.509-standard as extension data (213) into an end-device application certificate (211).

15. A telecommunication end device (300) in which a secure data carrier (400) is insertable or inserted, the data carrier (400) comprising data-carrier applications (421, 422, 423) installed in the data carrier (400), and a security application (410) installed in the data carrier (400), said security application being adapted to receive update data (418; 110, 111, 418) from a telecommunication end device (300) in which the data carrier (400) is inserted and to update or to install a data-carrier application (110) by configuring the data-carrier application (110) according to the update data (418; 110, 111, 418), the telecommunication end device (300) comprising end-device applications (311, 312) installed in the telecommunication end device (300), **characterized by** a programming interface (330) of the data carrier (400), said programming interface being adapted to extract update data (418; 110, 111, 418) from an end-device application certificate (211) of an end-device application (210) to be installed in the telecommunication end device (300) and to pass these on to the data carrier (400) for the configuration of a data-carrier application (110) executable on a data carrier (400) inserted in the telecommunication end device (300).

16. The telecommunication end device (300) according to claim 15, **characterized in that** an operating system (310) of the telecommunication end device (300) is an Android operating system and the end-device applications (210, 311, 312) are Android apps.

17. The telecommunication end device (300) according to claim 15 or 16, **characterized in that** the telecommunication end device (300) is adapted to update or to install a data-carrier application (110) on the data carrier in accordance with a method according to any of the claims 1 to 14.

18. The telecommunication end device (300) according to any of the claims 15 to 17, **characterized in that** the security application (410) is adapted to verify a signature (113) of an end-device application certificate (211) comprising the update data (418; 110, 111, 418) of an end-device application (210) to be installed in the telecommunication end device (300) by means of a data-carrier application certificate (111) which is deposited in a certificate list (412) managed by the security application (410) or in the end-device application certificate (211) itself, before the data-carrier application (110) is configured according to the update data (418; 110, 111, 418).

19. The telecommunication end device (300) according to any of the claims 15 to 18, **characterized by** a certificate list (412) managed by the security application (410) and at least one access right list (416), wherein the certificate list (412) comprises data-carrier application certificates (111) of the installed data-carrier applications (110; 421-423) and the at least one access right list (416) comprises access rights (418) of end-device applications (210, 311, 312) installed in the telecommunication end device (300) to the data-carrier applications (110, 421-423), wherein the security application (410) is adapted to update the certificate list (412) and the at least one access right list (416) according to the update data (418; 110, 111, 480).

20. The telecommunication end device (300) according to any of the claims 15 to 19, **characterized in that** the data carrier is a (U)SIM mobile communication card, a secure digital memory card or secure multimedia card and/or that an operating system (310) of the data carrier (400) is a Java-based or GlobalPlatform-conforming operating system and/or that the data-carrier applications (110, 421-423) and the security application (410) are Java applets.

21. The telecommunication end device (300) according to any of the claims 15 to 20, **characterized in that** the data carrier (400) is adapted such that a data-carrier application (110) can be updated or installed in accordance with a method according to any of the claims 1 to 14.

## Revendications

1. Procédé d'actualisation d'un support de données (400) mis en oeuvre dans un terminal de télécommunication (300), comprenant l'actualisation (S1-S11) ou l'installation (S2-S9, S10a-S10e, S11) d'une application pour support de données (110) exécutable sur un support de données (400) sécurisé, **caractérisé par** les étapes :
- intégration (S2) de données d'actualisation (418; 110, 111, 418), destinées à l'application pour support de données (110), dans un certificat d'application pour terminal (211) d'une application pour terminal (210) à installer dans un terminal (300) ;
- installation (S5) de l'application pour terminal (210) dans le terminal de télécommunication (300), et extraction (S9) des données d'actualisation (418; 110, 111, 418) à partir du certificat d'application pour terminal (211) ; et
- configuration (S10; S10a, S10e) de l'application pour support de données (110) conformément aux données d'actualisation (418; 110, 111, 418).

2. Procédé selon la revendication 1, **caractérisé en ce qu'**un fournisseur (100) de l'application pour support de données (110) intègre (S2) les données d'actualisation (418; 110, 111, 418) dans le certificat d'application pour terminal (211) et signe (S3) le certificat d'application pour terminal (211) avec une clé secrète (120).

3. Procédé selon la revendication 2, **caractérisé en ce qu'**une signature (113) du certificat d'application pour terminal (211) est, par une interface de programmation (330) du support de données (400) installée sur le terminal de télécommunication (300) ou par le support de données (400) lui-même, vérifiée (S8) avant que l'application pour support de données (110) ne soit configurée (S10; S10a, S10e) conformément aux données d'actualisation (418; 110, 111, 418).

4. Procédé selon une des revendications de 1 à 3, **caractérisé en ce que** les données d'actualisation (418; 110, 111, 418) sont intégrées (S2) de telle façon dans le certificat d'application pour terminal (211) qu'elles peuvent être transférées (S9) de manière transparente au support de données (400).

5. Procédé selon une des revendications de 1 à 4, **caractérisé en ce qu'**une application de sécurité (410) installée dans le support de données (400) actualise (S10; S10a) conformément aux données d'actualisation (418; 110, 111, 418), lors de la configuration (S10; S10a, S10e) de l'application pour support de données (110), une liste de certificats (412) et au moins une liste de droits d'accès (416), la liste de certificats (412) comprenant des certificats d'applications pour support de données (111) d'applications pour support de données (110, 421, 422, 423)
installées dans le support de données (400), et la au moins une liste de droits d'accès (416) indiquant des droits d'accès (418) d'applications pour terminal (210, 311, 312) installées dans le terminal de télécommunication (300) à des applications pour support de données (110, 421-423) installées dans le support de données (400).

6. Procédé selon la revendication 5, **caractérisé en ce qu'**une interface de programmation (330), en particulier une interface de programmation (330) selon la revendication 3, extrait les données d'actualisation (418; 110, 111, 418) à partir du certificat d'application pour terminal (211) et les transfère (S9) à l'application de sécurité (410).

7. Procédé de valeur selon la revendication 5 ou 6, **caractérisé en ce qu'**une ou la une interface de programmation (330), en particulier selon la revendication 3, ou l'application de sécurité (410) vérifie, lors d'un accès d'une application pour terminal (210, 311, 312) installée sur le terminal de télécommunication (300) à une application pour support de données (110, 421-423) installée dans le support de données (400), si, dans la au moins une liste de droits d'accès (416), des droits d'accès (418) correspondants de l'application pour terminal (210, 311, 312) sont enregistrés.

8. Procédé de valeur selon une des revendications de 5 à 7, **caractérisé en ce que** des données d'actualisation (418) concernant des droits d'accès (418) de l'application pour terminal (210) à une application pour support de données (110) installée dans le support de données (400) sont intégrées (S2) dans le certificat d'application pour terminal (211), et **en ce que** l'application pour support de données (110) est configurée (S10), ce qui a lieu **en ce que** les droits d'accès (418) sont déposés de telle façon dans la liste de droits d'accès (416) que l'application pour terminal (210) peut, lors d'une exécution sur le terminal de télécommunication (300), accéder à l'application pour support de données (110).

9. Procédé selon la revendication 8 **caractérisé en ce qu'**une ou la une interface de programmation (330), en particulier selon la revendication 3, vérifie (S8) la signature (113) du certificat d'application pour terminal (211) au moyen d'une clé publique (121) du fournisseur (100) de l'application pour support de données (110) déposée dans le certificat d'application pour support de données (111) de l'application pour support de données (110) compris dans la liste de certificats (412).

10. Procédé de valeur selon une des revendications de 5 à 7, **caractérisé en ce que** des données d'actualisation (110, 111, 418) concernant une application pour support de données (110) à installer dans le support de données (400) sont intégrées (S2) dans le certificat d'application pour terminal (211), la configuration (S10a, S10e) de l'application pour support de données (110) comprenant une installation de l'application pour support de données (110) dans le support de données (400).

11. Procédé de valeur selon la revendication 10, **caractérisé en ce que** les données d'actualisation (110, 111,418) concernent aussi un certificat d'application pour support de données (111) avec une clé publique (121) du fournisseur (100) de l'application pour support de données (110) et **en ce qu'**une ou la une interface de programmation (330), en particulier selon la revendication 3, ou l'application de sécurité (410) vérifie (S8) la signature (113) du certificat d'application pour terminal (211) au moyen de la clé publique (121) du fournisseur (100) de l'application pour support de données (110), et l'application de sécurité (410) enregistre (S10a) le certificat d'application pour support de données (111) dans la liste de certificats (412).

12. Procédé selon la revendication 10 ou 11, **caractérisé en ce que** les données d'actualisation (110, 111, 418) concernent aussi des droits d'accès (418) de l'application pour terminal (210) à l'application pour support de données (110) à installer, l'application de sécurité (410) enregistrant (S10a) les droits d'accès (418) dans la liste de droits d'accès (412).

13. Procédé selon la revendication 6 et une des revendications de 10 à 12, **caractérisé en ce que** l'interface de programmation (330), lors de l'installation (S10e) de l'application pour support de données (110), réceptionne (S10c) l'application pour support de données (110) de la part de l'application de sécurité (410) et l'installe (S10d, S10e) dans une gestion de support de données (420) du support de données (400).

14. Procédé selon une des revendications de 1 à 13, **caractérisé en ce que** les données d'actualisation (418; 110, 111, 418) sont intégrées (S2) en tant que données d'extension (213) dans un certificat d'application pour terminal (211) conformément au standard X.509.

15. Terminal de télécommunication (300) dans lequel est ou peut être inséré dans un support de données (400) sécurisé, le support de données (400) comprenant des applications pour support de données (421, 422, 423) installées dans le support de données (400) ainsi qu'une application de sécurité (410) installée dans le support de données (400) qui est conçue pour, d'un terminal de télécommunication (300) dans lequel le support de données (400) est inséré, recevoir des données d'actualisation (418; 110, 111, 418) et actualiser ou installer une application pour support de données (110), ce qui a lieu en ce que l'application pour support de données (110) est configurée conformément aux données d'actualisation (418; 110, 111, 418), le terminal de télécommunication (300) comprenant des applications de terminal (311, 312) installées dans le terminal de télécommunication (300), **caractérisé par** une interface de programmation (330) du support de données (400) conçue pour extraire des données d'actualisation (418; 110, 111, 418) à partir d'un certificat d'application pour terminal (211) d'une application pour terminal (210) à installer dans le
terminal de télécommunication (300) et pour les transférer au support de données (400) aux fins de la configuration d'une application pour support de données (110) exécutable sur un support de données (400) inséré dans le terminal de télécommunication (300).

16. Terminal de télécommunication (300) selon la revendication 15, **caractérisé en ce qu'**un système d'exploitation (310) du terminal de télécommunication (300) est un système d'exploitation Android et **en ce que** les applications de terminal (210, 311, 312) ont des apps Android.

17. Terminal de télécommunication (300) selon la revendication 15 ou 16, **caractérisé en ce que** le terminal de télécommunication (300) est conçu pour actualiser ou pour installer sur le support de données (400) une application pour support de données (110) conformément à un procédé selon une des revendications de 1 à 14.

18. Terminal de télécommunication (300) selon une des revendications de 15 à 17, **caractérisé en ce que** l'application de sécurité (410) est conçue pour vérifier une signature (113) d'un certificat d'application pour terminal (211), comprenant les données d'actualisation (418; 110, 111, 418), d'une application pour terminal (210) à installer sur le terminal de télécommunication (300), au moyen d'un certificat d'application pour support de données (111) qui est déposé dans une liste de certificats (412) gérée par l'application de sécurité (410) ou dans le certificat d'application pour terminal (211) lui-même, avant que l'application pour support de données (110) ne soit configurée conformément aux données d'actualisation (418; 110, 111, 418).

19. Terminal de télécommunication (300) selon une des revendications de 15 à 18, **caractérisé par** une liste de certificats (412) gérée par l'application de sécurité (410) et par au moins une liste de droits d'accès (416), la liste de certificats (412) comprenant des certificats d'applications pour support de données (111) des applications pour support de données installées (110, 421-423), et la au moins une liste de droits d'accès (416) comprenant des droits d'accès (418) d'applications de terminal (210, 311, 312) installées dans le terminal de télécommunication (300) aux applications pour support de données (110, 421-423), l'application de sécurité (410) étant conçue pour actualiser la liste de certificats (412) et la au moins une liste de droits d'accès (416) conformément aux données d'actualisation (418; 110, 111,480).

20. Terminal de télécommunication (300) selon une des revendications de 15 à 19, **caractérisé en ce que** le support de données est une carte de téléphonie mobile (U)SIM, une carte mémoire numérique sécurisée ou une carte de multimédia sécurisée et/ou **en ce qu'**un système d'exploitation (310) du support de données (400) est un système d'exploitation basé sur Java et/ou un système d'exploitation conforme à la plateforme globale et/ou **en ce que** les applications pour support de données (110, 421-423) et les applications de sécurité (410) sont des applets Java.

21. Terminal de télécommunication (300) selon une des revendications de 15 à 20, **caractérisé en ce que** le support de données (400) est conçu de telle façon qu'une application pour support de données (110,) peut être actualisée ou installée conformément à un procédé selon une des revendications de 1 à 14.
